# EUROPEAN PATENT SPECIFICATION

(11) **EP 2 593 835 B1**
(45) Date of publication and mention of the grant of the patent: **13.07.2016**
(21) Application number: 11806394.0
(22) Date of filing: 07.03.2011
(51) Int. Cl.: G03B 35/08, G02B 27/22, H04N 13/02

(54) **VARIABLE THREE-DIMENSIONAL CAMERA ASSEMBLY FOR STILL PHOTOGRAPHY**
VARIABLE 3D-KAMERAANORDNUNG ZUR STILLLEBEN-FOTOGRAFIE
ENSEMBLE APPAREIL PHOTOGRAPHIQUE EN TROIS DIMENSIONS VARIABLES POUR PHOTOGRAPHIE DE PLATEAU

(30) Priority: 13.07.2010 IN CH19882010
(43) Date of publication of application: 22.05.2013
(73) Proprietor: Mirlay, Ram Srikanth, Bangalore 560 080 (IN)
(72) Inventor: Mirlay, Ram Srikanth, Bangalore 560 080 (IN)
(74) Representative: KIPA AB
(86) International application number: PCT/IN2011/000145
(87) International publication number: WO 2012/007957

(56) References cited:
- CN-A- 101 496 414
- CN-U- 201 464 797
- GB-A- 308 839
- GB-A- 308 839
- JP-A- 2 025 842
- JP-A- S6 346 075
- JP-A- 10 186 550
- US-A- 3 990 087
- US-A- 5 581 399
- US-A- 6 144 809

## Description

### Technical field

The embodiments herein generally relate to a field of photography and particularly relates to a 3-D camera system. The embodiments herein more particularly relate to a variable 3-D camera assembly with a dual-camera arrangement for a still photography.

### Description of the Related Art

3-D imaging or stereoscopy is a technique capable of recording three-dimensional visual information or creating the illusion of depth in an image. Human vision uses several cues to determine relative depths in a perceived scene. Some of these cues are as follows: stereopsis, accommodation of the eyeball, occlusion of one object by another, subtended visual angle of an object of known size, linear perspective, vertical position, haze, de-saturation, a shift to bluishness and change in size of textured pattern detail. All of the cues, except the first two, are present in traditional two-dimensional images such as paintings, photographs and television. Stereoscopy is the enhancement of the illusion of depth in a photograph, movie or other two-dimensional image by presenting a slightly different image to each eye.

The differences between the Right and Left pictures are the most important visual information which our brain uses to perceive a depth of an image. The greater the difference, the deeper is the depth perception.

Traditional stereoscopic photography consists of creating a 3-D illusion starting from a pair of 2-D images. The easiest way to enhance depth perception in the brain is to provide the eyes of the viewer with two different images, representing two perspectives of the same object, with a certain deviation approximately equal to the perspectives that both eyes naturally receive in binocular vision.

The beginning of the 21st century marked the coming of the age of digital photography. Stereo lenses were introduced which could turn an ordinary film camera into a stereo camera by using a special double lens to take two images and direct them through a single lens to capture them side-by-side on the film. By mounting two cameras on a bracket, spaced apart a bit, with a mechanism wherein pictures can be taken at the same time. The precise methods for camera control have also allowed the development of multi-rig stereoscopic cameras where different slices of scene depth are captured using different inter-axial settings. The images of the slices are then composed together to form the final stereoscopic image pair. This allows important regions of a scene to be given better stereoscopic representation while less important regions are assigned less of the depth budget.

There have been cameras having dual camera system which work on a parallax phenomenon. The detector heads of such cameras remain parallel and never converge. There is a lateral separation of the two cameras and their visual input sources. Hence, the target goes out of the field of vision of one of the cameras. In other cameras, the axes of the two cameras are diverging and generally they deal with creating a 3-D virtual reality environment and models, not a 3-D vision or view.

Moreover in some dual camera systems, the two cameras are so fixed and so held together that the inter-camera distance remains fixed. So the whole camera system has to be adjusted for taking images from different angles. Also, these camera systems have single eyepiece, which affects their functionality.

Hence there is a need for a camera assembly with a dual-camera arrangement in which the cameras are adjustable and moved independently of each other to provide a 3-D view of the objects.

The above mentioned shortcomings, disadvantages and problems are addressed herein, which will be understood by reading the following specification.

### OBJECTS OF THE EMBODIMENTS

A primary objective of the embodiments herein is to develop a 3-D camera assembly having two image capturing devices in which the cameras incoming light-paths are single lens to capture them side-by-side on the film. By mounting two cameras on a bracket, spaced apart a bit, with a mechanism wherein pictures can be taken at the same time. The precise methods for camera control have also allowed the development of multi-rig stereoscopic cameras where different slices of scene depth are captured using different inter-axial settings. The images of the slices are then composed together to form the final stereoscopic image pair. This allows important regions of a scene to be given better stereoscopic representation while less important regions are assigned less of the depth budget.

There have, been cameras having dual camera system which work on a parallax phenomenon. The detector heads of such cameras remain parallel and never converge. There is a lateral separation of the two cameras and their visual input sources. Hence, the target goes out of the field of vision of one of the cameras. In other cameras, the axes of the two cameras are diverging and generally they deal with creating a 3-D virtual reality environment and models, not a 3-D vision or view.

Moreover in some dual camera systems, the two cameras are so fixed and so held together that the inter-camera distance remains fixed. So the whole camera system has to be adjusted for taking images from different angles. Also, these camera systems have single eyepiece, which affects their functionality.

GB308839 discloses a stereoscopic cinematograph camera, where the size of the picture that is subsequently projected on to a screen is predetermined and the distance between the point of view of the objectives of the camera is varied in accordance with the ratio of the real size of the subject that is being photographed to the size of projected picture. Accordingly, the cinematograph camera is used for magnifying and projecting stereoscopic motion pictures on a screen in conjunction with a projector, where movable tubes are arranged one above the other with a vertical spacing in between the tubes, in order to take images of the motion pictures, alternately, on a film through the rotating mirrors; magnify the image and project the magnified motion pictures in succession, on a screen.

US3990087 discloses a reflex camera device having a single lens for the photography of right and left images from an object space transmitted as first and second light ray bundles from two positions separated by an interocular distance onto a single frame of a single film strip.

Hence there is a need for a camera assembly with a dual camera arrangement in which the cameras are adjustable and moved independently of each other to provide a 3-D view of the objects.

The above mentioned shortcomings, disadvantages and problems are addressed herein, which will be understood by reading the following specification.

### OBJECTS OF THE EMBODIMENTS

A primary objective of the embodiments herein is to develop a 3-D camera

The embodiments herein provide a three-dimensional camera assembly. According to one embodiment herein, a variable 3-D camera assembly comprises a housing. A first camera unit is assembled inside the housing for viewing a target object through a left eye. A second camera unit is assembled inside the housing for viewing of the target object through a right eye. A common, shared, control unit is provided for adjusting the first camera and the second camera. A horizon parallel indicator is installed to hold the first and second camera unit at the horizontal level. An image processing unit is provided for a simultaneous three dimensional viewing of the target-object.

The common, shared control unit regulates an operation of the first and second camera units to capture an image of the target object at a plurality of angles to provide a three dimensional viewing of angle and to increase a degree of a depth of a perception of a three dimensional image of the target-object.

The first camera unit comprises a left eye piece and a left arm connected to the housing through a plurality of telescopically extendable first set of barrels. A first motorized control system for the left arm is provided. One or more left elbows are provided in the left arm for a forward rotation of the left arm. A left lens/ mirror / prism complexes is assembled at one end of the left arm. A left side display screen is provided to display an image of the target-object captured by the first camera unit. The first motorized control system regulates the operation of the first camera unit to adjus One or more left side mirrors is provided for conducting the light rays the left eye piece. A movement of the left objective to converge light rays on the target- object, by adjusting a bending angle of the left arm, for displaying an image of the target object on the left eye piece and the left side display screen simultaneously.

The second camera unit comprises a right eye piece and a right arm connected to the housing through a plurality of telescopically extended second set of barrels. A second motorized control system for the right arm is provided. One or more right elbows are provided in the right arm for a forward rotation of the right arm. A right mirror/prism/lens complex is assembled in the right arm. A right side display screen is provided for displaying an image of the target object captured by the second camera unit. One or more right side mirrors conduct light rays from the target-object to the right side display screen through the right objective and the right eye piece.

The second motorized control system regulates the operation of the second camera unit to adjust a movement of the right objective to converge light rays on the target-object, by adjusting a bending angle of the right arm, for displaying an image of the target object on the right eye piece and the right side display screen simultaneously.

A common motorized control for both the Left and the Right arms are also deployed.

The image processing unit includes mirrors, prisms, lenses and an image recording device.

The first camera unit and the second camera unit do not share a single optical axis for focusing the image on a photographic film or for displaying the image on the left side display screen and the right side display screen or for recording and storing the image on a storage device. An optic axis of the first camera unit and an optic axis the second camera unit are adjusted to converge on to the target object.

The left arm and the right arm are attached to the housing and coupled respectively with the first camera unit and the second camera unit. The left arm and the right arm moves synchronously, independently, manually or automatically, symmetrically as well as non-symmetrically for focusing the target object.

A length of an optical path in the first camera unit and a length of an optical path in the second camera unit is varied based on a distance of the target object from the first camera unit and the second camera unit for enhancing the 3-D effect. The left objective and right objective includes at least one of glasses and lenses arranged as a graticule. The left objective and right objective are optically coupled to the left eye piece and the right eye piece respectively.

The assembly further comprises a Plane Polarised light filter oriented vertically/horizontally in a light pathway of the first camera unit and the second camera unit respectively.

The first motorized control system in the first camera unit and the second motorized control system in the second camera unit are operated based on an output of the image processing unit to control a movement of the left arm, a movement of the right arm, a bending angle of the left arm and a bending angle of the right arm.

The assembly further comprises a mobile adjustable multi position primary lens, prisms, lenses and mirrors complex unit (LPMC), which are image processing units for the first camera unit and the second camera unit.

The right arm and the left arm have a plurality of joints to move the left arm and the right outwardly and inwardly to focus on the target object. The right arm and the left arm are made of at least one of metal and fiber optic. An electro-mechanical power unit controls a movement of the LMPC, the left arm and the right arm.

The assembly further comprises a master - slave camera system for an outdoor 3-D still photography. A master camera in the master -slave control system controls a slave camera in the master -slave control system through a wired network, wireless network, an internet, an intranet, Wide Area Network (WAN) and Local Area Network (LAN). The master camera includes a control panel for adjusting orientation of the slave camera in line with the target object.

According to one embodiment herein, the assembly comprises a single camera with a plain polarized filter or a single charge coupled device (CCD) or an image sensor for the 3-D still photography.

The left and the right Arms are adjusted to focus on the target object while keeping the left arm and the right arm in stationary condition.

The left side display screen and the right side display screen or selected from a group comprising a liquid crystal display (LCD) screen, a light emitting diode (LED) display screen and a plasma display screen (PDP).

The assembly includes a housing to accommodate two cameras for left eye viewing and right eye viewing of a target object, a common control for adjusting the first camera and the second camera, a horizon parallel indicator to hold the first camera and the second camera at the horizontal level with respect to the target object and a variable image processing unit for simultaneous three dimensional viewing of the target object.

The first camera includes a left eye piece, a left arm connected to the housing through telescopically extended barrels, a motorized control system for the left arm, one or more left elbows for forward rotation of the left arm, a left objective assembled at the end of telescopically projecting left arm, a left LCD screen and one or more left mirrors for conducting light rays. The left objective is adjusted to converge the light rays from the target object by adjusting bending angles of the left arm through the motorized control system for displaying the target object on the left eye piece and the left LCD screen simultaneously. Similarly, the second camera includes a right eye piece, a right arm connected to the housing through telescopically extended barrels, a motorized control system for the right arm, one or more right elbows for forward rotation of the right arm, a right objective assembled at the end of telescopically projecting right arm, a right LCD screen and one or more right mirrors for conducting light rays. The right objective is adjusted to converge light rays from the target object by adjusting bending angles of the right arm through the motorized control system for displaying the target object on the right eye piece and the right LCD screen simultaneously.

The eyepieces of the first camera and the second camera are arranged for viewing a picture are movable so that the inter eyepiece distance can be adjusted to the inter eye distance of the camera operator, based on the images being fed from the right and the left objectives. A plane polarized light filter is provided in both the input light pathway of the left and right cameras. The plane polarized light filter is vertically/ horizontally oriented. An image processing unit is provided for each camera. The motorized control of the cameras are regulated based on the output of the image processing units to control the movement and the bending angles of the arms to ensure that both the objectives are converged on a single desired target simultaneously to view the images acquired through the two cameras.

A common control is adopted for adjusting the two cameras. The common control performs auto focusing operation and adjusting the aperture and shutter speed, etc. A horizontal /horizon parallel indicator is provided to hold the cameras at the horizontal level to avoid any parallax errors. The assembly has a unique light image picture processing system provided with mirrors, prisms, lenses and an image recording device.

The image recording device is a digital recording device or the images are recorded on a photographic film. The image capturing device may a charge coupled device or an image sensor device.

The arms of the first camera and the second camera are telescopically projected out of the housing. The arms have multiple joints and elbows which move independent of each other. The arms move synchronously, independently, manually or automatically, symmetrically as well as non-symmetrically, for focusing the target. So the length of the arms can be varied based on the distance of the target from the camera, as well as the need for enhancement of 3D effect. The motorized control controls the movements of the arms to adjust the length and the angle of convergence and the horizontal or horizon indicator system holds the cameras at a horizontal level. There is a plane polarized light filter, vertically or horizontally oriented, in the right and left light input pathway.

A multi position primary lens /prism / mirrors complex unit (LMPC) is arranged inside the housing on a common optical axis of both the cameras. The LMPC is mobile adjustable. The LMPC is a picture or image transferring set present on each arm. The LMPC is fixed in the camera housing which focuses the image on a film or LCD or any storage device. The location of the LPMC can be altered. When the right and the left arms move synchronously symmetrically or non-symmetrically, the location of the LPMC is altered from X1 (closest to camera) to X2 (farthest from camera). The arms have multiple joints allowing them to move outwards (away from the camera) as well as inwards to focus on target. The arms are made of metal or fiber optic or other material combinations. The length of the right and left arms are varied based on the distance of target from camera, as well as on the need for enhancement of 3D effect. The electro-mechanical power unit is used to move the primary LMPC and the arms. The prior LMPC is mounted on a platform which can rotate around a vertical axis enabling a fine adjustment for accurate convergence of the right and the left optical medium. As the degree of convergence increases, the 3 D effect also increases. The LMPC is mounted to enable a sharing between the right and left optical media. The LPMC can be mounted on each arm also.

A single common control system is provided for controlling the right and the left image processing units, capturing and string devices of the two (right and left) optical systems. The various other functions which are controlled by the single control system are auto focusing, aperture adjusting, shutter speed adjusting, etc.

The variable image processing unit (IPU) is adopted for simultaneous three dimensional viewing of the target. The IPU is a unique light image picture processing system made of mirrors, prisms, lenses along with image recording device. The image recording device can be digital or it can be photographic film as according to various embodiment of the present invention.

According to one embodiment herein, a convergence tracking target cross with a circle in the right and left image processing units (IPU) is provided. Other tracking systems that are also used includes laser, light, etc

According to one embodiment herein, the various components of the 3-D camera are as follows: a digital sensor chip/ film, a lens, a view finder/LCD screen, a shutter, a flash, a memory card, an autofocus mechanism, an image stabilization mechanism, a control, a battery storage zone, an OEM, a lens rings, a controls for memory, a lights , an ambient light sensors, a speaker, a power switch, a flash one/two, a PC/AV terminal, a tripod socket, a buttons or controls for power, a zoom, a shutter release, a menu including an enter, an ok, a displace and a mean navigator.

Thus the various embodiments of the 3-D camera assembly enable to adjust the degree of convergence of the objectives to a desired level and to vary the inter-optical distance of the left and right incident light beams easily, efficiently and accurately to enhance the 3-D effect.

According to one embodiment herein, a master - slave camera system is provided for outdoor 3-D photography. The camera system consists of a master camera. The master camera controls the slave camera placed at a long distance (in meters) from the master camera remotely through wired, wireless and internet/intranet, WAN, LAN networks. The master camera controls the slave camera through wire or wireless networks remotely. The master camera has a control panel for adjusting the orientation of the slave camera in space to orient it towards the target. The slave camera can be moved in all directions. All camera settings are synchronizable with master camera. The distance between the two cameras is variable. The two cameras can also be used as single still individual camera. All other configurations of the master and the slave camera are similar to the variable 3-D camera used for still photography.

According to one embodiment herein, the images can be viewed directly or projected on a flat screen. The images projected on a flat screen is viewed through a 3-D goggles or plane polarized spectacles. The images can be projected on LCD monitor and viewed through a 3-D goggles or plane polarized spectacles.

According to one embodiment herein, the movement or the adjustment of the left arm and the right arm to focus on the target object is done manually by an operator or electronically by the left motor and the right motor respectively.

According to one embodiment herein, the outstretching of the left arm and the right arm away from the camera to the maximum increase the angle that is subtended by the left and the right paths at the object.

According to one embodiment herein, the retracting of the left arm and the right arm towards the camera reduces the distance between the left optics and the right optics and reduces the angle between the left visual path and the right visual path of the object resulting in a diminished depth perception of the target object.

According to one embodiment herein, the left arm and the right arm are retracted and protruded to focus on the target object. One or more elbows adopted in the left arm and the right arm helps in forward rotation of the left arm and the right arm to focus on the target object.

According to one embodiment herein, the left objective/ LPMC and the right objective/LMPC of the first and the second camera are moved or adjusted keeping the left arm and the right arm at the fixed position to focus on the target object.

According to one embodiment herein, a single camera with a plain polarized filter and a single CCD or an image sensor can be used to take 2-D still photography.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein.

### BRIEF DESCRIPTION OF THE DRAWINGS

The other objects, features and advantages will occur to those skilled in the art from the following description of the preferred embodiments herein and the accompanying drawings in which:
FIG. 1A-B illustrate a side view of the 3-D camera showing various features, according to one example herein and FIG. 1C illustrates a side view of the 3-D camera with multiple barrels of the movable and telescoping arms, according to one example herein.
FIG. 2 illustrates an illustration of the flexible elbow joints of the barrels of the movable and telescoping arm.
FIG. 3 illustrates a master slave camera system with large inter distance for outdoor 3-D still photography, according to one embodiment herein.

Although the specific features of the embodiments herein are shown in some drawings and not in others. This is done for convenience only as each feature may be combined with any or all of the other features in accordance with the embodiments herein.

### DETAILED DESCRIPTION OF THE EMBODIMENTS HEREIN

In the following detailed description, a reference is made to the accompanying drawings that form a part hereof, and in which the specific embodiments that may be practiced is shown by way of illustration. These embodiments are described in sufficient detail to enable those skilled in the art to practice the embodiments and it is to be understood that the logical, mechanical and other changes may be made without departing from the scope of the embodiments. The following detailed description is therefore not to be taken in a limiting sense.

The various embodiments herein provide a three-dimensional dual-camera assembly. The assembly includes a housing to accommodate two cameras for left eye viewing and right eye viewing of a target object, a common control for adjusting the first camera and the second camera, a horizon parallel indicator to hold the first camera and the second camera at the horizontal level with respect to the target object and a variable image processing unit for simultaneous three dimensional viewing of the target object. The first camera includes a left eye piece, a left movable and telescoping arm connected to the housing through telescopically extended barrels, a motorized control system for the left arm, one or more left elbows for forward rotation of the left arm, a left objective assembled at the end of telescopically projecting left arm, a left LCD screen and one or more left mirrors for conducting light rays. The left objective is adjusted to converge light rays on the target object by adjusting bending angles of the left arm through the motorized control system for displaying the target object on the left eye piece and the left LCD screen simultaneously. Similarly, the second camera includes a right eye piece, a right movable and telescoping arm connected to the housing through telescopically extended barrels, a motorized control system for the right arm, one or more right elbows for forward rotation of the right arm, a right objective assembled at the end of telescopically projecting right arm, a right LCD screen and one or more right mirrors for conducting light rays. The right objective is adjusted to converge light rays on the target object by adjusting bending angles of the right arm through the motorized control system for displaying the target object on the right eye piece and the right LCD screen simultaneously.

The eyepieces of the first camera and the second camera are arranged for viewing a picture are movable so that the inter eyepiece distance can be adjusted to the inter eye distance of the camera operator, based on the images being fed from the right and the left objectives. A plane polarized light filter is provided in both the input light pathway of the left and right cameras. The plane polarized light filter is vertically/ horizontally oriented. An image processing unit is provided for each camera. The motorized control of the cameras are regulated based on the output of the image processing units to control the movement and the bending angles of the arms to ensure that both the objectives are converged on a single desired target simultaneously to view the images acquired through the two cameras.

A common control is adopted for adjusting the two cameras. The common control performs auto focusing operation and adjusting the aperture and shutter speed, etc. A horizontal /horizon parallel indicator is provided to hold the cameras at the horizontal level to avoid any parallax errors. The assembly has a unique light image picture processing system provided with mirrors, prisms, lenses and an image recording device.

The image recording device is a digital recording device or the images are recorded on a photographic film. The image capturing device may a charge coupled device or an image sensor device.

The arms of the first camera and the second camera are telescopically projected out of the housing. The arms have multiple joints and elbows which move independent of each other. The arms move synchronously, independently, manually or automatically, symmetrically as well as non-symmetrically, for focusing the target. So the length of the arms can be varied based on the distance of the target from the camera, as well as the need for enhancement of 3D effect. The motorized control controls the movements of the arms to adjust the length and the angle of convergence and the horizontal or horizon indicator system holds the cameras at a horizontal level. There is a plane polarized light filter, vertically or horizontally oriented, in the right and left light input pathway.

A multi position primary lens /prism / mirrors complex unit (LMPC) is arranged inside the housing on a common optical axis of both the cameras. The LMPC is mobile adjustable. The LMPC is a picture or image transferring set present on each arm. The LMPC is fixed in the camera housing which focuses the image on a film or LCD or any storage device. The location of the LPMC can be altered. When the right and the left arms move synchronously symmetrically or non-symmetrically, the location of the LPMC is altered from closest to camera farthest from the camera. The arms have multiple joints allowing them to move outwardly as well as inwardly to focus on target. The arms are made of metal or fiber optic or other material combinations. The length of the right and left arms are varied based on the distance of target from camera, as well as on the need for enhancement of 3D effect. The electro-mechanical power unit is used to move the primary LMPC and the arms. The prior LMPC is mounted on a platform which can rotate around a vertical axis enabling a fine adjustment for accurate convergence of the right and the left optical medium. As the degree of convergence increases, the 3 D effect also increases. The LMPC is mounted to enable a sharing between the right and left optical media. The LPMC can be mounted on each arm also.

A single common control system is provided for controlling the right and the left image processing units, capturing and string devices of the two (right and left) optical systems. The various other functions which are controlled by the single control system are auto focusing, aperture adjusting, shutter speed adjusting, etc.

The variable image processing unit (IPU) is adopted for simultaneous three dimensional viewing of the target. The IPU is a unique light image picture processing system made of mirrors, prisms, lenses along with image recording device. The image recording device can be digital or it can be photographic film as according to various embodiment of the present invention.

According to one embodiment herein, a convergence tracking target cross with a circle in the right and left image processing units (IPU) is provided. Other tracking systems can also be used are laser, light, etc.

According to one embodiment herein, a master - slave camera system is provided for outdoor 3-D photography. The camera system consists of a master camera. The master camera controls the slave camera placed at a long distance (in meters) from the master camera remotely through wired, wireless and internet/intranet, WAN, LAN networks. The master camera controls the slave camera through wire or wireless networks remotely. The master camera has a control panel for adjusting the orientation of the slave camera in space to orient it towards the target. The slave camera can be moved in all directions. All camera settings are synchronizable with master camera. The distance between the two cameras is variable. The two cameras can also be used as single still individual camera. All other configurations of the master and the slave camera are similar to the variable 3-D camera used for still photography.

According to one embodiment herein, the movement or the adjustment of the left arm and the right arm to focus on the target object is done manually by an operator or electronically by the left motor and the right motor respectively.

According to one embodiment herein, the images can be viewed directly or projected on a flat screen. The images projected on a flat screen is viewed through a 3-D goggles or plane polarized spectacles. The images can be projected on LCD monitor and viewed through a 3-D goggles or plane polarized spectacles.

According to one embodiment of the present invention, the outstretching of the left arm and the right arm away from the camera to the maximum increase the left and the right paths suspended at the object.

According to one embodiment herein, the retracting of the left arm and the right arm towards the camera reduces the distance between the left optics and the right optics and reduces the angle between the left visual path and the right visual path of the object resulting in a diminished depth perception of the target object.

According to one embodiment herein, the left arm and the right arm are retracted and protruded to focus on the target object. One or more elbows adopted in the left arm and the right arm helps in forward rotation of the left arm and the right arm to focus on the target object.

According to one embodiment herein, the left objective and the right objective of the first and the second camera are moved or adjusted keeping the left arm and the right arm at the fixed position to focus on the target object.

According to one embodiment herein, a single camera with a plain polarized filter and a single CCD or an image sensor can be used to take 3-D still photography.

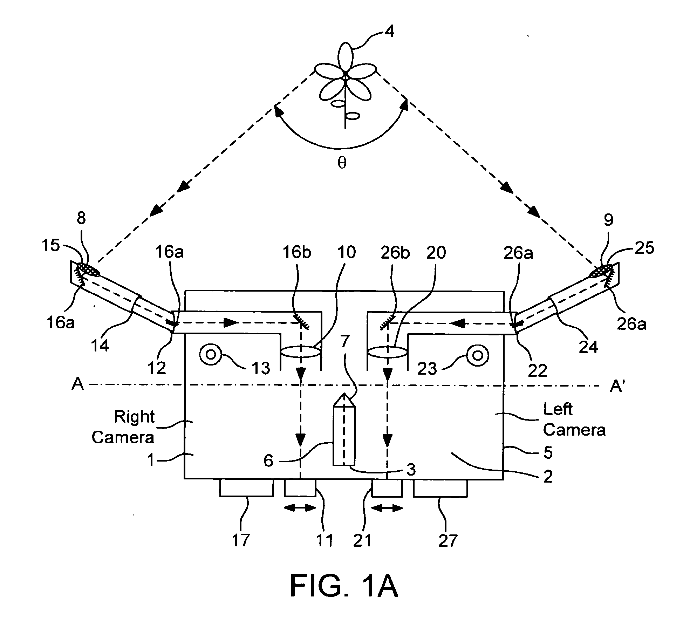

FIG. 1A-B illustrates a top view of the 3-D camera showing various features, according to one example herein. As shown in FIG. 1A-B the housing has two cameras, the left camera 1 and the right camera 2. The left camera 1 has left eyepiece 11 and the right camera 2 has right eyepiece 21. The left arm 12 and the right arm 22 are connected to the housing 5 through telescoping joints and elbows 14 and 24. The objectives 15 and 25 are provided for both the left arm 12 and the right arm 22 at the further end of the left arm 12 and right arm 22 to focus on the target object 4. The objectives 15 and 25 are made of assemblies of graticules 8 and 9 and grids of lenses or glasses. The objectives 15 and 25 are optically coupled with the two cameras 1 and 2 through two arms 12 and 22. The movement of the left arm 12 and the right arms 22 is controlled by a left motor 13 and right motor 23 separately, respectively. The light rays are conducted with the help of mirrors 16a and 16b to the objective 15 in the left camera 1. Similarly, in the right camera 2 the light rays are conducted with the help of mirrors 26a and 26b to the objective 25. The two cameras 1 and 2 are independently movable to capture different views of the target object 4 from different angles. A system of common control 6 for controlling the left camera 1 and the right camera 2 is adopted. Horizon indicator 7 is adopted for keeping the left camera 1 horizontal with respect to the right camera 2. The 3-D camera assembly also includes a left and right synchronizer for synchronizing the left camera 1 and the right camera 2. The variable 3-D camera assembly also includes a left LCD 17 and right LCD 27 on the housing 5 to display the target object 4.

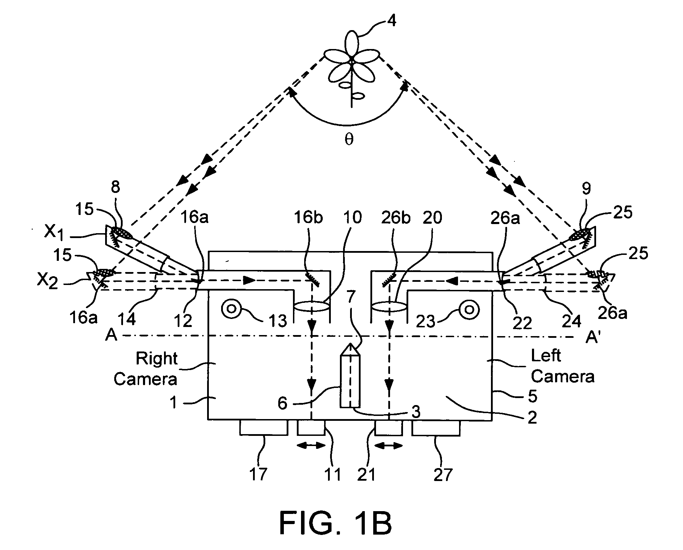

The variable image processing unit also includes a multi position primary lens or prisms or mirrors complex unit (LMPC) for both the left camera 1 and the right camera 2. The LMPC is a mobile adjustable. The LMPC is fixed in the camera housing 5 which focuses the image on a film or LCD or any storage device. The location of the LPMC can be altered. When the left arm 12 and the right arm 22 moves synchronously symmetrically or non-symmetrically, the location of the prior LPMC is altered from X1 (closest to camera) to X2 (farthest from camera) as shown in FIG. 1B. The arms 12 and 22 have multiple joints allowing them to move outwards (away from the camera) as well as inwards (nearer to the camera) to focus on the target object 4. The length of the left arm 12 and the right arm 22 vary based on the distance of target object 4 from the camera, as well as on the need for enhancement of the 3-D effect. An electro-mechanical power unit is adopted to move the primary LMPC and the arms 12 and 22. The LMPC is mounted on a platform which can rotate around a vertical axis giving it fine adjustment capacity for accurate convergence on sharing between the left camera 1 and the right camera 2. As the degree of convergence increases, the 3-D effect also increases.

According to one embodiment herein, the set of LMPC can be placed on left arm 12 and the right arm 22 respectively to work independently for left camera 1 and the right camera 2.

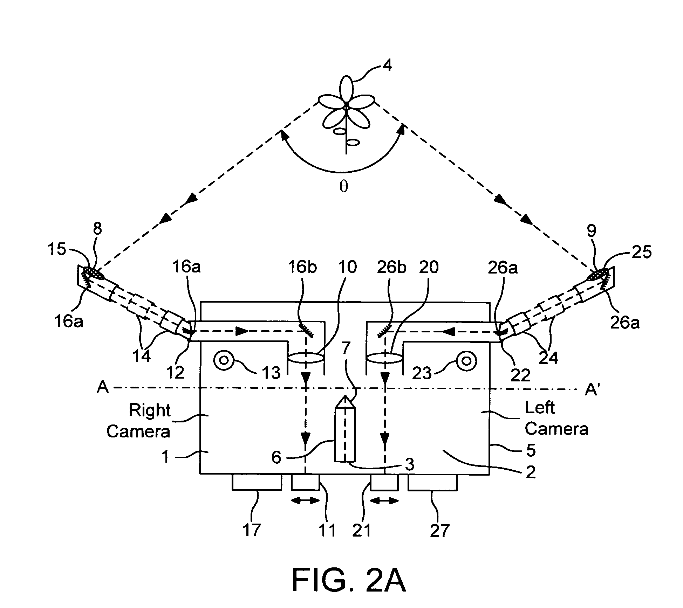

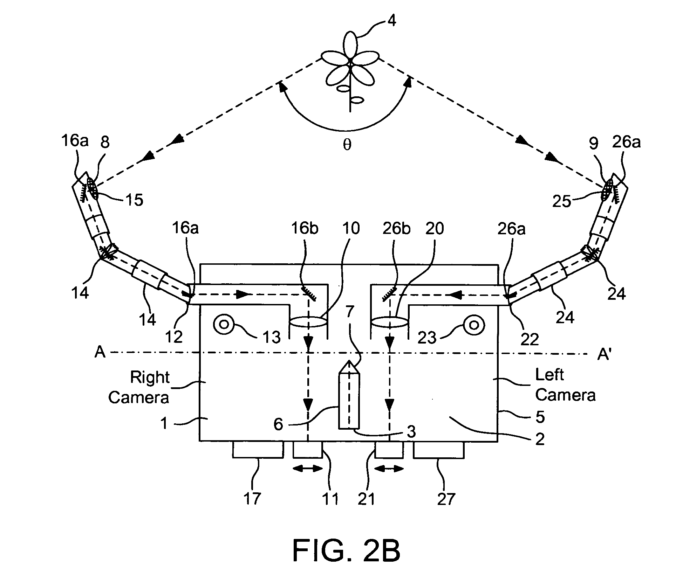

FIG. 2 illustrates a side view of the 3-D camera with multiple telescoping joints and elbows of the left and right arms, according to one embodiment herein. As shown in FIG. 2 the housing has two cameras, the left camera 1 and the right camera 2. The left camera 1 has left eyepiece 11 and the right camera 2 has right eyepiece 21. The left arm 12 and the right arm 22 are connected to the housing 5 through a multiple telescoping joints and elbows 14 and 24. The objectives 15 and 25 are provided for both the left arm 12 and the right arm 22 at the further end of the left arm 12 and right arm 22 to focus on the target object 4. The objectives 15 and 25 are made of assemblies of graticules 8 and 9 and grids of lenses or glasses. The objectives 15 and 25 are optically coupled with the two cameras 1 and 2 through two arms 12 and 22. The movement of the left arm 12 and the right arms 22 is controlled by a left motor 13 and right motor 23 separately, respectively. The light rays are conducted with the help of mirrors 16a and 16b to the objective 15 in the left camera 1. Similarly, in the right camera 2 the light rays are conducted with the help of mirrors 26a and 26b to the objective 25. The two cameras 1 and 2 are independently movable to capture different views of the target object 4 from different angles. A system of common control 6 for controlling the left camera 1 and the right camera 2 is adopted. Horizon indicator 7 is adopted for keeping the left camera 1 horizontal with respect to the right camera 2. The variable 3-Dimensional camera assembly of this invention includes a left and right synchronizer for synchronizing the left camera 1 and the right camera 2. The variable 3-D camera assembly also includes a left LCD 17 and right LCD 27 on the housing 5 to display the target object 4.

According to one embodiment herein, the telescoping joints and multiple elbows adopted on the left arm and right arm helps in forward rotation of the left arm and the right arm to focus on the target object. The telescoping left arm and right arm retracts and protrudes to focus on the target object, whereas one or more elbows on the left arm and the right arm helps in forward rotation of the left arm and the right arm to focus on the target object.

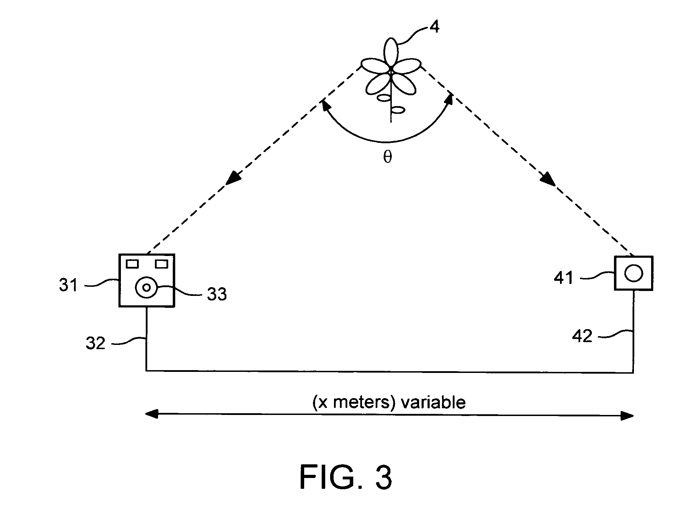

FIG. 3 illustrates the master slave camera with large inter distance for outdoor 3-D still photography, as one embodiment herein. The master slave camera for outdoor 3-D photography consists of a master camera 31 mounted on a stand 32 and similarly, a slave camera 41 mounted on a stand 42. The slave camera 41 is positioned away from the master camera 31. The slave camera 41 is placed at a distance of x meters from the master camera 41 as shown in FIG. 3. The cameras 31 and 41 provide 3-D view of distantly placed target object 4. The master camera 31 is provided with a control panel 33 for controlling the different actions of the slave camera 41. The master camera 31 can control the orientation of the slave camera 41 for focusing the distant target object 4. The distance between the two cameras 31 and 41 is variable. All camera settings of the slave camera 42 are synchronized to the master camera 31. The two cameras 31 and 41 are also used as a single still individual camera. All other configurations of the master camera 31 and the slave camera 41 are similar to the 3-D camera for still photography.

According to one embodiment herein, the images of the target object 4 can be viewed directly or projected on a flat screen or on LCD. The images projected on a flat screen is viewed through a 3-D goggles or plane polarized spectacles. The images can also be projected on LCD monitor and viewed through a 3-D goggles or plane polarized spectacles.

Thus the various embodiments of the 3-D camera assembly enable to adjust the degree of convergence of the objectives to a desired level and to vary the inter-optical distance of the left and right incident light beams easily, efficiently and accurately to enhance the 3-D effect.

The 3-D camera of the embodiments herein allows to view the three dimensional image of a target object directly, as no computer system is present to process the visual data. The two image capturing devices of the 3-D camera work separately and independently from each other providing ease of operation. The 3-D camera of the present invention includes digital projection 3-D spectacles, which can simultaneously project right and left images. The 3-D camera has a design which incorporates convergence to ensure simultaneous locking of the different views of the target. The 3-D camera of the present invention also allows an easy and efficient capturing of 3-D images of different objects.

The images of the target object from the 3-D camera of the present invention can be viewed directly or projected on a flat screen. The images projected on a flat screen is viewed through a 3-D goggles or plane polarized spectacles. The images can also be projected on LCD monitor and viewed through a 3-D goggles or plane polarized spectacles. The camera of the embodiments herein does not use a software program to project the 3-D images.

The foregoing description of the specific embodiments will so fully reveal the general nature of the embodiments herein that others can, by applying current knowledge, readily modify and/or adapt for various applications such specific embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the appended claims.

Although the embodiments herein are described with various specific embodiments, it will be obvious for a person skilled in the art to practice the embodiments herein with modifications.

## Claims

1. A variable 3-D camera assembly, the assembly comprising;
a housing (5);
a first camera unit (1) assembled inside the housing for viewing a target object (4) through a left eye;
a second camera unit (2) assembled inside the housing for viewing of the target object through a right eye;
a control unit for adjusting the first camera and the second camera;
a horizon parallel indicator (7) to hold the first camera unit at the horizontal level with respect to the second camera unit;
an image processing unit (3) for a simultaneous three dimensional viewing of the target object;
wherein the control unit regulates an operation of the first camera unit and the second camera unit to view and capture an image of the target object at a plurality of angles to provide a three dimensional viewing and to be able to increase a degree of depth perception of a three dimensional image of the target object, wherein the first camera unit comprises;
a left eye piece (11);
a left arm (12) connected to the housing through a plurality of telescopically extended first set of barrels;
a first motorized control system (13) for the left arm;
multiple left elbows for a forward rotation of the left arm;
a left objective (15) arranged at one end of the left arm;
a left side display screen (17); and
one or more left side mirrors (16a, 16b) for conducting light rays to the left eye piece; wherein the first motorized control system regulates the operation of the first camera unit to adjust a movement of the left objective to converge light rays on the target object, by adjusting a bending angle of the left arm, for displaying an image of the target object on the left eye piece and the left side display screen simultaneously, and wherein the second camera unit comprises;
a right eye piece (21);
a right arm (22) connected to the housing through a plurality of telescopically extended second set of barrels;
a second motorized control system (23) for the right arm;
multiple right elbows (24) for a forward rotation of the right arm;
a right objective (25) arranged at one end of the right arm;
a right side display screen (27); and
one or more right side mirrors (26a, 26b) for conducting light rays;
wherein the second motorized control system regulates the operation of the second camera unit to adjust a movement of the right objective to converge light rays on the target object, by adjusting a bending angle of the right arm, for displaying an image of the target object on the right eye piece and the right side display screen simultaneously.

2. The assembly according to claim 1, wherein the image processing unit includes mirrors, prisms, lenses and an image recording device.

3. The assembly according to claim 1, wherein the first camera unit and the second camera unit do not share a single optical axis for focusing the image on a photographic film or for displaying the image on the left side display screen and the right side display screen or for recording and storing the image on a storage device.

4. The assembly according to claim 1 wherein an optic axis of the first camera unit and an optic axis the second camera unit are adjustable to converge on to the target object.

5. The assembly according to claim 1, wherein the left arm and the right arm are attached to the housing and coupled respectively with the first camera unit and the second camera unit.

6. The assembly according to claim 1, wherein the left arm and the right arm is movable synchronously, independently, manually or automatically, symmetrically as well as non-symmetrically for focusing the target object.

7. The assembly according to claim 1, wherein a length of an optical path in the first camera unit or a length of an optical path in the second camera unit is varied based on a distance of the target object from the first camera unit and the second camera unit for enhancing the 3-D effect.

8. The assembly according to claim 1, wherein the image processing unit includes a multi position primary lens or prisms or mirrors complex unit (LPMC) which is mobile adjustable, and/or wherein the left objective and right objective includes at least one of glasses and lenses arranged as a graticule.

9. The assembly according to claim 1, further comprising a Plane Polarised light filter oriented vertically/horizontally in a light pathway of the first camera unit and the second camera unit

10. The assembly according to claim 1, wherein the first motorized control system in the first camera unit and the second motorized control system in the second camera unit are operated based on an output of the image processing unit to control a movement of the left arm, or a movement of the right arm, a bending angle of the left arm or a bending angle of the right arm.

11. The assembly according to claim 1, wherein the right arm and the left arm have a plurality of joints to move the left arm and the right outwardly and inwardly to focus on the target object.

12. The assembly according to claim 1, wherein the right arm and the left arm is made of at least one of metal and fiber optic.

13. The assembly according to claim 1, wherein the left objective and the right objective alone are adjustable to focus on the target object while keeping the left arm and the right arm in stationary condition.

14. The assembly according to claim 1, wherein the left side display screen and the right side display screen or selected from a group comprising a liquid crystal display (LCD) screen, a light emitting diode (LED) display screen and a plasma display screen (PDP).

## Patentansprüche

1. Variable 3-D Kamera-Anordnung, wobei die Anordnung umfasst;
Gehäuse (5);
erste Kamera-Einheit (1), die innerhalb des Gehäuses montiert ist, so dass ein Zielobjekt (4) durch ein linkes Auge betrachtet werden kann;
zweite Kamera-Einheit (2), die innerhalb des Gehäuses montiert ist, so dass ein Zielobjekt durch ein rechtes Auge betrachtet werden kann;
Steuereinheit zur Einstellung der ersten Kamera und der zweiten Kamera;
Horizontparallenen-Indikator (7), um die erste Kamera-Einheit in Bezug auf die zweite Kamera-Einheit in einer horizontalen Ebene zu halten;
Bildverarbeitungseinheit (3) für eine simultane dreidimensionale Betrachtung des Zielobjekts;
wobei die Steuereinheit einen Betrieb der ersten Kamera-Einheit und der zweiten Kamera-Einheit reguliert, um ein Bild des Zielobjekts unter einer Vielzahl von Winkeln zu betrachten und einzufangen, so dass eine dreidimensionale Ansicht geliefert und ein Grad der Tiefenwahrnehmung bei einem dreidimensionalen Bild des Zielobjekts erhöht werden kann, wobei die erste Kamera-Einheit umfasst;
linkes Okular (11);
linken Arm (12), der durch eine Vielzahl von teleskopisch ausgezogenen Zylindern eines ersten Satzes mit dem Gehäuse verbunden ist;
erstes motorisches Steuerungssystem (13) für den linken Arm;
mehrere linke Krümmer für eine Vorwärtsdrehung des linken Arms;
linkes Objektiv (15), das an einem Ende des linken Arms angeordnet ist;
linksseitige Bildschirmanzeige (17); und
einen oder mehrere linksseitige Spiegel (16a, 16b) zum Hinleiten von Lichtstrahlen zum linken Okular; wobei das erste motorische Steuerungssystem den Betrieb der ersten Kamera-Einheit reguliert, um eine Bewegung des linken Objektivs einzustellen, so dass Lichtstrahlen auf das Zielobjekt konvergiert werden, und zwar durch das Einstellen des Biegewinkels des linken Arms, so dass ein Bild des Zielobjekts simultan auf dem linken Okular und der linksseitigen Bildschirmanzeige angezeigt werden kann, und wobei die zweite Kamera-Einheit umfasst;
rechtes Okular (21);
rechten Arm (22), der durch eine Vielzahl von teleskopisch ausgezogenen Zylindern eines zweiten Satzes mit dem Gehäuse verbunden ist;
zweites motorisches Steuerungssystem (23) für den rechten Arm;
mehrere rechte Krümmer (24) für eine Vorwärtsdrehung des rechten Arms;
rechtes Objektiv (25), das an einem Ende des rechten Arms angeordnet ist;
rechtsseitige Bildschirmanzeige (27); und
einen oder mehrere rechtsseitige Spiegel (26a, 26b) zur Leitung von Lichtstrahlen; wobei das zweite motorische Steuerungssystem den Betrieb der zweiten Kamera-Einheit reguliert, um eine Bewegung des rechten Objektivs einzustellen, so dass Lichtstrahlen auf das Zielobjekt konvergiert werden, und zwar durch Einstellen eines Biegewinkels des rechten Arms, so dass ein Bild des Zielobjekts gleichzeitig auf dem rechten Okular und der rechtsseitigen Bildschirmanzeige angezeigt werden kann.

2. Anordnung gemäß Anspruch 1, wobei die Bildverarbeitungseinheit Spiegel, Prismen, Linsen und eine Bildaufzeichnungsvorrichtung umfasst.

3. Anordnung gemäß Anspruch 1, wobei sich die erste Kamera-Einheit und die zweite Kamera-Einheit keine einzige optische Achse teilen, um das Bild auf einem fotografischen Film zu fokussieren oder das Bild auf der linksseitigen Bildschirmanzeige und der rechtsseitigen Bildschirmanzeige anzuzeigen oder um das Bild in einer Speichervorrichtung aufzuzeichnen und zu speichern.

4. Anordnung gemäß Anspruch 1, wobei eine optische Achse der ersten Kamera-Einheit und eine optische Achse [der] zweiten Kamera-Einheit einstellbar sind, so dass sie auf dem Zielobjekt konvergieren.

5. Anordnung gemäß Anspruch 1, wobei der linke Arm und der rechte Arm mit dem Gehäuse verbunden und jeweils mit der ersten Kamera-Einheit und der zweiten Kamera-Einheit gekoppelt sind.

6. Anordnung gemäß Anspruch 1, wobei der linke Arm und der rechte Arm sich auf synchrone, unabhängige, manuelle oder automatische, symmetrische sowie nichtsymmetrische Weise bewegen lassen, um das Zielobjekt zu fokussieren.

7. Anordnung gemäß Anspruch 1, wobei eine Länge eines Strahlengangs in der ersten Kamera-Einheit und eine Länge eines Strahlengangs in der zweiten Kamera-Einheit auf der Grundlage eines Abstandes des Zielobjekts von der ersten Kamera-Einheit und der zweiten Kamera-Einheit variiert wird, um den 3D-Effekt zu verbessern.

8. Anordnung gemäß Anspruch 1, wobei die Bildverarbeitungseinheit eine primäre Multipositions-Komplexeinheit aus Linsen oder Prismen oder Spiegeln (LPMC) umfasst, die mobil einstellbar ist, und/oder wobei das linke Objektiv und das rechte Objektiv mindestens eines aus Gläsern und Linsen umfasst, welche als ein Gitternetz angeordnet sind.

9. Anordnung gemäß Anspruch 1, ferner einen eben polarisierten Lichtfilter umfassend, der vertikal/ horizontal in einer Lichtbahn der ersten Kamera-Einheit und der zweiten Kamera-Einheit ausgerichtet ist.

10. Anordnung gemäß Anspruch 1, wobei das erste motorische Steuerungssystem in der ersten Kamera-Einheit und das zweite motorische Steuerungssystem in der zweiten Kamera-Einheit auf der Grundlage eines Ausgangs der Bildverarbeitungseinheit betrieben werden, um eine Bewegung des linken Arms, eine Bewegung des rechten Arms, einen Biegewinkel des linken Arms und einen Biegewinkel des rechten Arms zu steuern.

11. Anordnung gemäß Anspruch 1, wobei der rechte Arm und der linke Arm eine Vielzahl von Gelenken aufweisen, so dass der linke Arm und der rechte [Arm] nach außen und nach innen bewegt werden kann, um auf das Zielobjekt zu fokussieren.

12. Anordnung gemäß Anspruch 1, wobei der rechte Arm und der linke Arm aus mindestens einem aus Metall und Faseroptik hergestellt sind.

13. Anordnung gemäß Anspruch 1, wobei das linke Objektiv und das rechte Objektiv allein einstellbar sind, um auf das Zielobjekt zu fokussieren, während der linke Arm und der rechte Arm in einem stationären Zustand beibehalten werden.

14. Anordnung gemäß Anspruch 1, wobei die linksseitige Bildschirmanzeige und die rechtsseitige Bildschirmanzeige aus einer Gruppe ausgewählt sind, die einen Flüssigkristallanzeige(LCD)-Bildschirm, eine Leuchtdioden(LED)-Bildschirmanzeige und eine Plasmabildschirmanzeige (PDP) umfasst.

## Revendications

1. Ensemble d'appareil de prise de vues à trois dimensions variable, l'ensemble comprenant :
un boîtier (5) ;
une première unité d'appareil de prise de vues (1) assemblée à l'intérieur du boîtier pour visualiser un objet cible (4) avec un oeil gauche ;
une seconde unité d'appareil de prise de vues (2) assemblée à l'intérieur du boîtier pour visualiser l'objet cible avec l'oeil droit ;
une unité de commande destinée à ajuster le premier appareil de prise de vues et le second appareil de prise de vue ;
un indicateur de parallélisme d'horizon (7) destiné à maintenir la première unité d'appareil de prise de vues au niveau horizontal par rapport à la seconde unité d'appareil de prise de vue ;
une unité de traitement d'image (3) pour une visualisation en trois dimensions simultanée de l'objet cible ;
dans lequel l'unité de commande régule un fonctionnement de la première unité d'appareil de prise de vues et de la seconde unité d'appareil de prise de vues pour visualiser et acquérir une image de l'objet cible suivant une pluralité d'angles pour fournir une visualisation en trois dimensions et pour pouvoir augmenter un degré de perception de profondeur d'une image en trois dimensions de l'objet cible, dans lequel la première unité d'appareil de prise de vues comprend ;
un oculaire gauche (11) ;
un bras gauche (12) connecté au boîtier par le biais d'une pluralité de barreaux d'un premier ensemble de barreaux allongés de façon télescopique ;
un premier système de commande motorisée (13) pour le bras gauche ;
de multiples coudes gauche pour une rotation vers l'avant du bras gauche ;
un objectif gauche (15) disposé au niveau d'une extrémité du bras gauche ;
un écran d'affichage côté gauche (17) ; et
un ou plusieurs miroirs côté gauche (16a, 16b) pour conduire des rayons de lumière vers l'oculaire gauche ;
dans lequel le premier système de commande motorisée régule le fonctionnement de la première unité d'appareil de prise de vues pour ajuster un mouvement de l'objectif gauche pour faire converger les rayons de lumière sur l'objet cible, en ajustant un angle d'inclinaison du bras gauche, pour afficher une image de l'objet cible sur l'oculaire gauche et l'écran d'affichage côté gauche simultanément, et dans lequel la seconde unité d'appareil de prise de vues comprend ;
un oculaire droit (21) ;
un bras droit (22) connecté au boîtier par le biais d'une pluralité de barreaux d'un second ensemble de barreaux allongés de manière télescopique ;
un second système de commande motorisée (23) pour le bras droit ;
de multiples coudes droit (24) pour une rotation vers l'avant du bras droit ;
un objectif droit (25) disposé à une extrémité du bras droit ;
un écran d'affichage côté droit (27) ; et
un ou plusieurs miroirs côté droit (26a, 26b) destinés à conduire des rayons de lumière ;
dans lequel le second système de commande motorisée régule le fonctionnement de la seconde unité d'appareil de prise de vues pour ajuster un mouvement de l'objectif droit pour faire converger les rayons de lumière sur l'objet cible, en ajustant un angle d'inclinaison du bras droit, pour afficher une image de l'objet cible sur l'oculaire droit et l'écran d'affichage côté droit simultanément.

2. Ensemble selon la revendication 1, dans lequel l'unité de traitement d'image inclut des miroirs, des prismes, des lentilles et un dispositif d'enregistrement d'image.

3. Ensemble selon la revendication 1, dans lequel la première unité d'appareil de prise de vues et la seconde unité d'appareil de prise de vues ne partagent pas un seul axe optique pour focaliser l'image sur un film photographique ou pour afficher l'image sur l'écran d'affichage côté gauche et l'écran d'affichage côté droit ou pour enregistrer et mémoriser l'image sur un dispositif de mémorisation.

4. Ensemble selon la revendication 1, dans lequel un axe optique de la première unité d'appareil de prise de vues et un axe optique de la seconde unité d'appareil de prise de vues sont ajustables pour une convergence sur l'objet cible.

5. Ensemble selon la revendication 1, dans lequel le bras gauche et le bras droit sont fixés au boîtier et couplés respectivement à la première unité d'appareil de prise de vues et à la seconde unité d'appareil de prise de vue.

6. Ensemble selon la revendication 1, dans lequel le bras gauche et le bras droit sont mobiles de manière synchrone, indépendamment, manuellement ou automatiquement, symétriquement ainsi que non symétriquement pour une focalisation sur l'objet cible.

7. Ensemble selon la revendication 1, dans lequel une longueur d'un trajet optique dans la première unité d'appareil de prise de vues ou une longueur d'un trajet optique dans la seconde unité d'appareil de prise de vues est modifiée sur la base d'une distance de l'objet cible par rapport à la première unité d'appareil de prise de vues et la seconde unité d'appareil de prise de vues pour améliorer l'effet en trois dimensions.

8. Ensemble selon la revendication 1, dans lequel l'unité de traitement d'image inclut une unité de complexe de lentilles ou de prismes ou de miroirs primaire à plusieurs positions (LPMC) qui est mobile et ajustable, et/ou dans lequel l'objectif gauche et l'objectif droit incluent au moins un élément parmi des verres et des lentilles disposés sous la forme d'un graticule.

9. Ensemble selon la revendication 1, comprenant en outre un filtre de lumière à polarisation plane orienté verticalement/horizontalement dans un trajet de lumière de la première unité d'appareil de prise de vues et de la seconde unité d'appareil de prise de vue.

10. Ensemble selon la revendication 1, dans lequel le premier système de commande motorisée dans la première unité d'appareil de prise de vues et le second système de commande motorisée dans la seconde unité d'appareil de prise de vues fonctionnent à partir d'une sortie de l'unité de traitement d'image pour commander un mouvement du bras gauche, ou un mouvement du bras droit, un angle d'inclinaison du bras gauche ou un angle d'inclinaison du bras droit.

11. Ensemble selon la revendication 1, dans lequel le bras droit et le bras gauche ont une pluralité d'articulations pour déplacer le bras gauche et le bras droit vers l'extérieur et vers l'intérieur pour une focalisation sur l'objet cible.

12. Ensemble selon la revendication 1, dans lequel le bras droit et le bras gauche sont constitués d'au moins l'un de métal et de fibre optique.

13. Ensemble selon la revendication 1, dans lequel l'objectif gauche et l'objectif droit seuls sont ajustables pour une focalisation sur l'objet cible tout en maintenant le bras gauche et le bras droit dans un état stationnaire.

14. Ensemble selon la revendication 1, dans lequel l'écran d'affichage côté gauche et l'écran d'affichage côté droit sont sélectionnés à partir d'un groupe comprenant un écran d'affichage à cristaux liquides (LCD), un écran d'affichage à diodes électroluminescentes (DEL) et un écran d'affichage à plasma (PDP).
